# EUROPEAN PATENT SPECIFICATION

(11) **EP 2 060 077 B1**
(45) Date of publication and mention of the grant of the patent: **20.03.2019**
(21) Application number: 07843916.3
(22) Date of filing: 05.10.2007
(51) Int. Cl.: H04L 29/06

(54) **INDICATING OR REMARKING OF A DSCP**
ANGABE ODER ANMERKUNG EINES DSCP
INDICATION OU REMARQUAGE D'UN DSCP

(30) Priority: 13.10.2006 US 549554
(43) Date of publication of application: 20.05.2009
(73) Proprietor: Cisco Technology, Inc., San Jose, CA 95134-1706 (US)
(72) Inventor: POLK, James Martin, Colleyville, Texas 76034 (US); MCMENAMY, Kevin Roy, Fremont, California 94538 (US); DHESIKAN, Subhasri, San Jose, California 95129 (US)
(74) Representative: Kazi, Ilya
(86) International application number: PCT/US2007/080581
(87) International publication number: WO 2008/048797

(56) References cited:
- US-A1- 2002 036 983
- US-A1- 2002 165 966
- US-A1- 2002 194 362
- US-A1- 2004 156 380
- US-A1- 2004 165 587
- BAKER CISCO SYSTEMS F: "Recommended Packet Marking Policy; draft-ietf-ieprep-packet-marking-policy-00 .txt", 20020621, vol. ieprep, 21 June 2002 (2002-06-21), XP015019459, ISSN: 0000-0004

## Description

### TECHNICAL FIELD

The present disclosure relates generally to modifying a packet in a packet switched network.

### BACKGROUND

In one sense, the Internet can be thought of as a series of protocols working together to pass information from one destination to another. These various protocols can be represented conceptually as the TCP/IP protocol stack, or the OSI model. Each of these models depicts a series of layers with various protocols being used at each layer to enable devices to communicate with each other.

Some of the various protocols that are used to allow one network device to communicate with another network device include, the TCP/IP protocol, the Session Initiation Protocol (SIP), the Session Description Protocol (SDP), the TCP/IP protocols, the Real-Time Streaming Protocol (RTSP), and the Real-time Transport Protocol (RTP) just to name a few of the protocols used in the Internet. These protocols are used, in some cases, to facilitate the streaming of media.

US2004/0165587 describes a session relay apparatus for preventing packet relay delay by detecting the start and end of a policy settable peer to peer communication.

US2004/0156380 describes a method and system utilising a multi-level expedited forwarding per hop behaviour (MLEF PHP) which manages buffer space to provide priority to calls based on a predefined priority scheme.

US2002/0036983 describes a method of filtering and gating data flow in a QoS connection between a remote host and user equipment in a packet data network using policy control mechanisms.

### BRIEF DESCRIPTION OF DRAWINGS

Embodiments are illustrated by way of example and not limitation in the figures of the accompanying drawings, in which like references indicate similar elements and in which:
Figure 1 shows a diagrammatic representation of machine in the example form of a computer system within which a set of instructions, for causing the machine to perform any one or more of the methodologies discussed herein, may be executed.
Figure 2 is an example schema of an Internet Protocol Version 4 (IPv4) datagram.
Figure 3 is an example schema of an Internet Protocol Version 6 (IPv6) datagram.
Figure 4 is an example schema of a TCP segment.
Figure 5 is an example schema of a UDP segment.
Figure 6 is an example schema of an RTP packet.
Figure 7 is an example schema of an IPv4 datagram with a UDP segment included in its load section.
Figure 8 is an example schema of an IPv4 datagram with a UDP segment included in its load section.
Figure 9 is an example diagram describing the initial setting of DSCP values within the B2BUA context.
Figure 10 is an example diagram describing the changing of DSCP values with the B2BUA context.
Figure 11 is a flow chart describing an example method to generate a new DSCP value.
Figure 12 is an example network diagram describing the initiation of a bandwidth reservation over a VoIP network.
Figure 13 is an example network diagram describing the failure of a bandwidth reservation.
Figure 14 is an example network diagram describing endpoints being informed of the reservation failure, and the need for a new DSCP value.

### DESCRIPTION OF EXAMPLE EMBODIMENTS

In the following description, for purposes of explanation, numerous specific details are set forth in order to provide a thorough understanding of an embodiment of the present invention. It will be evident, however, to one skilled in the art that the present invention may be practiced without these specific details.

### OVERVIEW

The invention relates to a method, as further defined in claim 1, a machine-readable medium, as further defined in claim 5, an apparatus, as further defined in claim 6, and a system, as further defined in claim 7.

### EXAMPLE EMBODIMENT OF A COMPUTER SYSTEM

Some embodiments may be implemented on a digital processing system or computer system that includes a processor, which may represent one or more processors and may include one or more conventional types of such processors (e.g., x86, x86-64), such as an AMD processor, Intel Pentium processor or other suitable processor. A memory is coupled to the processor by a bus. The memory may be a dynamic random access memory (DRAM) and/or may include static RAM (SRAM). The processor may also be coupled to other types of storage areas/memories (e.g., cache, Flash memory, disk, etc.), which could be considered as part of the memory or separate from the memory.

In some embodiments, a bus further couples the processor to a display controller, a mass memory or some type of computer-readable medium device, a modem or network interface card or adaptor, and an input/output (I/O) controller. In some embodiments, the display controller controls, in a conventional manner, a display, which may represent a cathode ray tube (CRT) display, a liquid crystal display (LCD), a plasma display, or other type of suitable display device. Computer-readable medium, in some embodiments, may include a mass memory magnetic, optical, magneto-optical, tape, and/or other type of machine-readable medium/device for storing information. For example, the computer-readable medium may represent a hard disk, a read-only or writeable optical CD, etc. In some embodiments, a network adaptor card such as a modem or network interface card is used to exchange data across a network such as an Internet. In some embodiments, the I/O controller controls I/O device(s), which may include one or more keyboards, mouse/trackball or other pointing devices, magnetic and/or optical disk drives, printers, scanners, digital cameras, microphones, etc.

Some embodiments may be implemented entirely in executable computer program instructions which are stored on a computer-readable medium or may be implemented in a combination of software and hardware, or in certain embodiments, entirely in hardware.

Example embodiments include computer-readable medium for carrying or having computer-executable instructions or data structures stored thereon. Such computer-readable medium may be any available medium, which is accessible by a general-purpose or special-purpose computer system. By way of example, and not limitation, such computer-readable medium can comprise physical storage medium such as RAM, ROM, EPROM, CD-ROM or other optical-disk storage, magnetic-disk storage or other magnetic-storage devices, or any other medium which can be used to carry or store desired program code means in the form of computer-executable instructions, computer-readable instructions, or data structures and which may be accessed by a general-purpose or special-purpose computer system. This physical storage medium may be fixed to the computer system as in the case of a magnetic drive or removable as in the case of an EEPROM device (e.g., flash memory device).

In some embodiments, when information is transferred or provided over a network or another communications connection (e.g., either hardwired, wireless, or a combination of hardwired or wireless) to a computer system, the connection is properly viewed as a computer-readable medium. Thus, any such connection is properly termed a computer-readable medium. Combinations of the above should also be included within the scope of computer-readable medium. Computer-executable or computer-readable instructions comprise, for example, instructions and data which cause a general-purpose computer system or special-purpose computer system to perform a certain function or group of functions. The computer-executable or computer-readable instructions may be, for example, binaries, or intermediate format instructions such as assembly language, or even source code.

In this description and in the following claims, a computer system is defined as one or more software modules, one or more hardware modules, or combinations thereof, that work together to perform operations on electronic data. For example, the definition of computer system includes the hardware modules of a personal computer, as well as software modules, such as the operating system of the personal computer. The physical layout of the modules is not important. A computer system may include one or more computers coupled via a network. Likewise, a computer system may include a single physical device (e.g., a mobile phone or Personal Digital Assistant (PDA)) where internal modules (e.g., a processor and memory) work together to perform operations on electronic data.

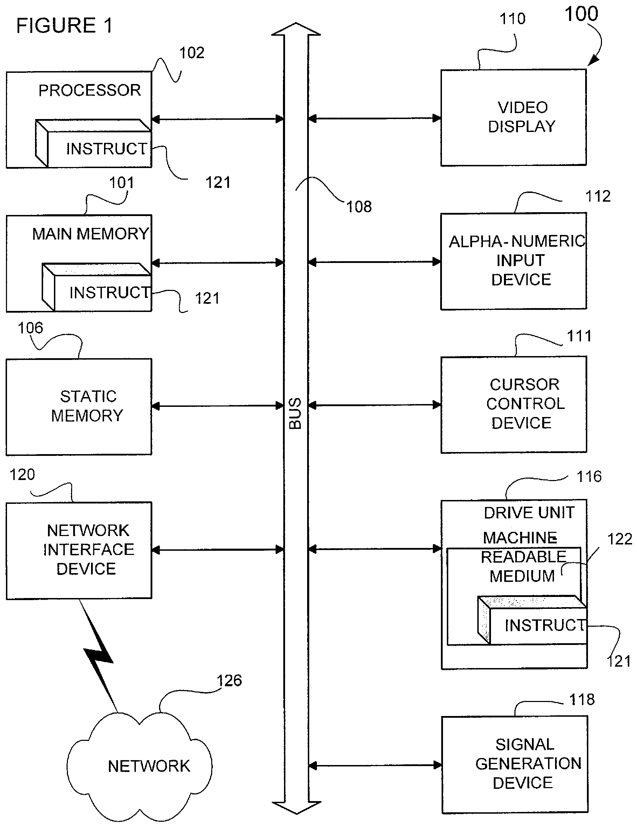

Figure 1 shows a diagrammatic representation of a machine in the example form of a computer system 100 within which a set of instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine. In some embodiments, a computer system may include a device capable of implementing VoIP technology such as a VoIP phone, cell phone, PDA, FAX machine, or other suitable device. Further, while only a single machine is illustrated, the term "machine" shall also be taken to include any collection of machines that individually or jointly execute a set (or multiple sets) of instructions to perform any one or more of the methodologies discussed herein. Example embodiments can also be practiced in distributed system environments where local and remote computer systems, which are linked (e.g., either by hardwired, wireless, or a combination of hardwired and wireless connections) through a network, both perform tasks. In a distributed system environment, program modules may be located in both local and remote memory-storage devices (see below).

The example computer system 100 includes a processor 102 (e.g., a central processing unit (CPU), a graphics processing unit (GPU) or both), a main memory 101 and a static memory 106, which communicate with each other via a bus 108. The computer system 100 may further include a video display unit 110 (e.g., a liquid crystal display (LCD) or a cathode ray tube (CRT)). The computer system 100 also includes an alphanumeric input device 112 (e.g., a keyboard), a user interface (UI) cursor controller 111 (e.g., a mouse), a disk drive unit 116, a signal generation device 118 (e.g., a speaker) and a network interface device (e.g., a transmitter) 120.

The disk drive unit 116 includes a machine-readable medium 122 on which is stored one or more sets of instructions and data structures (e.g., software) embodying or utilized by any one or more of the methodologies or functions described herein. The software may also reside, completely or at least partially, within the main memory 101 and/or within the processor 102 during execution thereof by the computer system 100, the main memory 101 and the processor 102 also constituting machine-readable media.

The instructions 121 may further be transmitted or received over a network 126 via the network interface device 120 utilizing any one of a number of well-known transfer protocols (e.g., HTTP, SIP).

While the machine-readable medium 122 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention, or that is capable of storing, encoding or carrying data structures utilized by or associated with such a set of instructions. The term "machine-readable medium" shall accordingly be taken to include, but not be limited to, solid-state memories, optical and magnetic media, and carrier wave signals.

### EXAMPLE MODELS OF VARIOUS PROTOCOLS AND THEIR RESPECTIVE DATA ORGANIZATION

In some embodiments, the OSI or TCP/IP protocol stack models for defining a network across which to pass data is utilized. Applying these models, in some embodiments, a system of data transmission between a server and client computer system, or computer systems organized in a peer-to-peer configuration, can be described as a series of roughly five layers comprising as a: physical layer, data link layer, network layer, transport layer and application layer. (See Open System Networking: TCP/IP and OSI, by David M. Piscitello & A. Lyman Chapin, Addison-Wesley, 1993.) In some embodiments, the various levels (e.g., the Interface, Logic and Storage levels) reside on the application layer of the TCP/IP protocol stack. In some embodiments, the present application utilizes HTTP, SIP, SDP, H.248, MGCP, User Datagram Protocol (UDP), Transmission Control Protocol (TCP), or RTP to transmit data between the server and client applications, whereas in other embodiments another protocol known in the art is utilized. In some embodiments, content from an application residing at the application layer is loaded into the data load field of a UDP or TCP segment residing at the transport layer. In some embodiments, this UDP or TCP segment also contains port information for a recipient application residing remotely. In some embodiments, this UDP or TCP segment is loaded into the data field of an IP datagram residing at the network layer. Next, in some embodiments, this IP datagram is loaded into a frame residing at the data link layer. This frame is then encoded at the physical layer and the content transmitted over a network such as an Internet, LAN or WAN. In some embodiments, Internet refers to a network of networks. In some embodiments, such networks may use a variety of protocols for exchange of information, such as TCP/IP, ATM, SNA, SDI, etc, and may be used within a variety of topologies or structures. In some embodiments, this network may include a Carrier Sensing Multiple Access Network-Collision Detection (CSMA-CD) such an Ethernet based network.

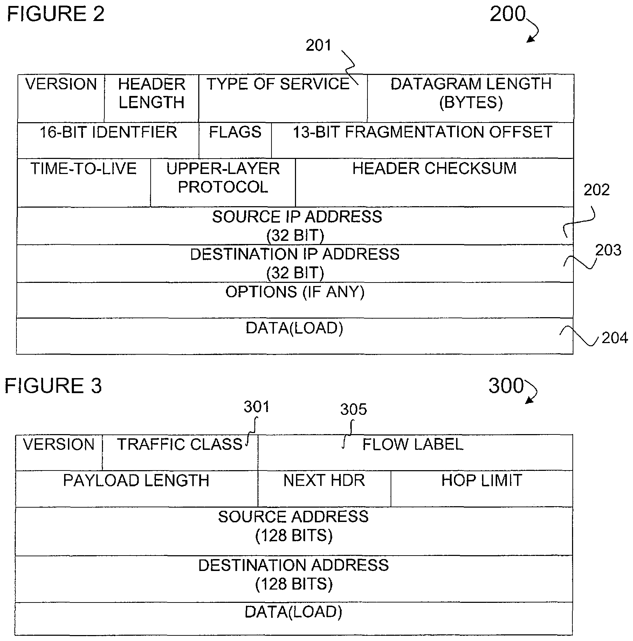

Figure 2 is an example schema 200 of an Internet Protocol Version 4 (IPv4) datagram. The various fields and associated functionality of these fields is described in Request for Comment (RFC) 791. In some embodiments, a Type of Service (TOS) field 201 is described. In RFC 791, the following 8 bits are allocated to the TOS field:
bits 0-2: precedence
bit 3: 0 = Normal Delay, 1 = Low Delay
bit 4: 0 = Normal Throughput, 1 = High Throughput
bit 5: 0 = Normal Reliability, 1 = High Reliability
bits 6-7: Reserved for future use

This TOS field 201 is used for, among other things, Differentiated Services ("DiffServ"). While the TOS field was obsoleted by RFC 2474, which created the Differentiated Services Codepoint (DSCP) as the first 6 bits of the one byte field, many in the art still refer to this byte in the header as the TOS field. More to the point, the TOS field, and associated bits included in the IPv4 header, allow different types of IP datagrams (e.g., datagrams particularly requiring low delay, high throughput, or reliability) to be distinguished from each other in terms of the level of service that each requires. For example, datagrams containing, or relating to, real-time data (e.g., used by an IP telephony application) can be distinguished from datagrams containing data, or relating to, non-real-time traffic (e.g., File Transfer Protocol (FTP) related applications and data). In some embodiments, the TOS field is used by routers to define different levels of packet treatment that can be provided by the router to each packet. This is called a Per Hop Behavior (PHB), in which the router differentiates one packet from the next in line based on the value of the DSCP. That is, real-time data may, for example, require a higher level of service, as compared to, for example, non-real-time traffic. In some embodiments, bandwidth is controlled by routers using the TOS field and the values contained therein. In some embodiments, a Source IP Address Field 202 is described, and a Destination IP Address 203 is described. In some embodiments, a data or load field 204 is also described. As will be discussed below, this load field 204 contains, in some embodiments, UDP or TCP segments among other things.

Figure 3 is an example schema 300 of an Internet Protocol Version 6 (IPv6) datagram. The various fields and associated functionality of these fields is described in RFC 2460. In some embodiments, a Traffic Class 301 field and a Flow Label 305 field is described as controlling flow. RFC 1752 and RFC 2460 state that these fields allow "labeling of packets belonging to particular flows for which the sender requests special handling, such as a non-default quality of service or real-time service." For example, audio and video transmission might likely be treated as a flow. On the other hand, the more traditional applications, such as file transfer and e-mail might not be treated as flows. It is possible that the traffic carried by a high-priority user (e.g., someone paying for better service for their traffic) might also be treated as a flow. In some embodiments, the Traffic Class 301 field is like the TOS field in IPv4, and can be used to give priority to certain packets within a flow, or it can be used to give priority to datagrams from certain applications (e.g., ICMP packets) over datagrams from other applications.

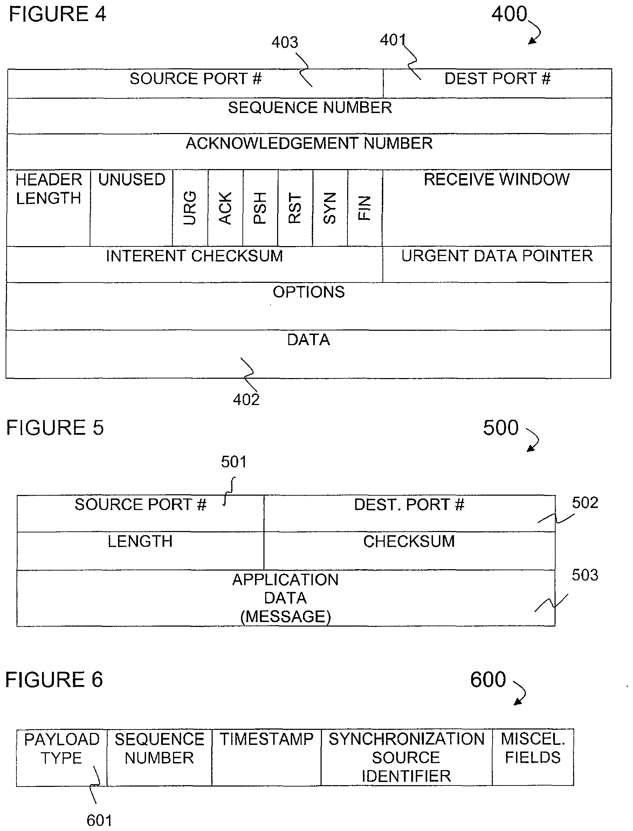

Figure 4 is an example schema 400 of a TCP segment. The various fields and associated functionality of these fields is described in RFC 793. In some embodiments, a destination port number 401 is described, which denotes the receiving port. In some embodiments, a data or load field 402 is described. In some embodiments, the data or load field 402 contains whatever the upper layer protocol wants, but this protocol is not set in the header and is presumed based on the port selection. In some embodiments, a source port number field 403 is described denoting the sending port.

Figure 5 is an example schema 500 of a UDP segment. The various fields and associated functionality of these fields is described in RFC 768. In some embodiments, a source port number field 501 is described. This field identifies the sending port when meaningful and, in some embodiments, the port to reply to if needed. In some embodiments, a destination port number 502 is described. In some embodiments, an application data or message field 503 is described.

Figure 6 is a schema 600 of an RTP packet. The various fields and associated functionality of these fields is described in RFC 3550. In some embodiments a payload type 601 field is described to denote the particular type of codec used to encode a particular type of payload. In some embodiments, these payload types can, for example, include: G.711 (PCM µ-law or a-law) (Payload Type Number 0), GSM (Payload Type Number 3), Motion JPEG (Payload Type Number 26), H.261 (Payload Type Number 31), MPEG1 (Payload Type Number 32), and MPEG2 (Payload Type Number 33), H.263 (Payload Type Number 34) or some other suitable payload type. (See Computer Networking: A Top-Down Approach Featuring the Internet 2nd Edition, James F. Kurose and Keith W. Ross, Addison-Wesley, 2003.) In some embodiments, these RTP packets may be referred to as a media flow, or RTP Flow.

In some embodiments, a DSCP value (see RFC 2474 and 2475.) is inserted into the first six bits of the TOS field 201 of an IPv4 datagram, or the Traffic Class field 301 of an IPv6 datagram. This may, for example, be an eight (8) bit sub field used to establish the PHB. This field may be used by network routers to determine the treatment that a particular packet of data will receive in being forwarded. Put another way, in some embodiments, a packet with one DSCP value may receive a higher priority, than another packet with another DSCP value. Example DSCP values are reflected in the below table, taken from RFC 4594:

| Service Class Name | DSCP Name | DSCP Value (In Decimal) | Application Examples |
|---|---|---|---|
| Network Control | CS6 | 48 | Network routing |
| Telephony | EF | 46 | IP Telephony bearer |
| Signaling | CS5 | 40 | IP Telephony signaling |
| Multimedia Conferencing | AF41, AF42 | 40, 36 | H.323/V2 video conferencing (adaptive) |
| | AF43 | 38 | |
| Real-Time Interactive | CS4 | 32 | Video conferencing and Interactive gaming |
| Multimedia Streaming | AF31, AF32 | 26, 28 | Streaming video and audio on demand |
| | AF33 | 30 | |
| Broadcast Video | CS3 | 24 | Broadcast TV & live events |
| Low-Latency Data | AF21, AF22 | 18, 20 | Client/server transactions Web-based ordering |
| | AF23 | 22 | |
| OAM | CS2 | 16 | OAM&P |
| High-Throughput Data | AF11, AF12 | 10, 12 | Store and forward applications |
| | AF13 | 14 | |
| Standard | DF (CS0) | 0 | Undifferentiated applications |
| Low-Priority Data | CS1 | 8 | Any flow that has no BW assurance |

### EXAMPLE IMPLENTATION OF A NEW PROTOCOL FIELD VALUE TO CHANGE A DSCP VALUE

In an example embodiment, a DSCP value is changed by adding a new field or manipulating an existing field of a protocol session. For example, in an example embodiment, a new media level attribute line (a "DSCP Change Field") denoted by an "a=" line is inserted into an SDP session message indicating the DSCP of an RTP flow has changed. For example, in some embodiments, if the RTP flow is 2-way, the marking is symmetric. In some embodiments, this SDP message containing the new DSCP Change Field can be inserted into the body of a SIP dialog or session header or the body of an RTSP header. In some embodiments, a DSCP Change Field can be used in the SIP or RTSP message itself, without the use of an SDP session. Described below are some example implementations using SIP in combination with SDP. In some embodiments, "session" as, referred to herein, includes any exchange of data (e.g., voice, video etc.) using a protocol, and various fields and methods therein, such as SDP, SIP, or RTSP alone, or, in combination with one another. In some embodiments, these various protocols are used in combination with IPv4, IPv6, or a combination of IPv6 and IPv4 in a tunnelling context. In an example embodiment, it is a SIP Stateful Proxy server such as a B2BUA (Back-to-Back-User-Agent) or SBC (Session Border Controller) that observes the changes, or initiates the changes in the control plane signaling, to the DSCP value through using a new DSCP Change Field, while it is a device such as a computer system, VoIP phone or other suitable device that actually implements the change to the media stream packets.

### EXAMPLE EMBODIMENTS USING SIP AND SDP

In some embodiments, a method is described that allows for a way to indicate and/or modify the DSCP marking for a new or existing VoIP call (e.g., RTP packet flow). The indication and/or modification may, for example, be performed at call set-up or during an established call. In some embodiments, a call is established via SIP, and described via SDP. In some embodiments, "hint" may be provided to a remote endpoint as to what is being done on the near side of a call such that the call traverses more than one local domain, but local policy dictates what each DSCP markings will be.

Client/Server architectures have the benefit of the server's ability to change the conditions within a call, among other aspects, during the call, without downing the call. In some cases, a peer-to-peer protocol architecture protocol struggles with this ability unless it is configured in a more statefully aware client/server implementation. In some embodiments, a means to change the Quality of Service (QoS) available is facilitated based upon observed network changes.

SIP is an application layer control (signaling) protocol for creating, modifying and terminating multimedia sessions with one or more participants (See RFC 3261). Put another way, SIP is a lightweight protocol that may do the following: it provides mechanisms for establishing calls between a caller and a callee over an IP network, it allows the caller to notify the callee that it wants to start a call (this is called an "offer"), it allows the participants to agree on media encodings, it also allows participants to end calls, and it provides mechanisms for the caller to determine the current IP address of the callee and the media codecs to be used (this is called the "answer"). When SIP is coupled with SDP in such a signaling way this is called an Offer/Answer exchange, and is defined in RFC 3264. Users do not have a single, fixed IP addresses because they may be assigned addresses dynamically (using DHCP) and because they may have multiple IP devices, each with a different IP address it provides mechanisms for call management, such as adding new media streams during the call, changing the encoding during the call, inviting new participants during the call, call transfer, and call holding. In some embodiments, it is common for a SIP message to have a series of header fields such as: SIP Method, Via, Max-Forwards, To, From, Call-ID, CSeq, Contact, Content-Type, and Content-Length. These fields are coded (and written) in ASCII text.

In some embodiments, SDP is a format for describing streaming media initialization parameters (See RFC 4566 & 3264). SDP is intended for describing multimedia sessions for the purposes of session announcement, session invitation, and other forms of multimedia session initiation. SDP can be used in conjunction with RTP, SIP and as a standalone format for describing multicast sessions. There are five concepts related to SDP: Conference- Is a set of two or more communicating users along with the software they are using; Session- Session is the multimedia sender and receiver and the flowing stream of data; Session Announcement- A session announcement is a mechanism by which a session description is conveyed to users in a proactive fashion (e.g., the session description was not explicitly requested by the user); Session Advertisement- same as session announcement; Session Description- A well defined format for conveying sufficient information to discover and participate in a multimedia session. In some embodiments, SDP data is contained in the body of the SIP message. In some embodiments, this SDP data has the following form:
v = protocol version
o = owner/creator and session identifier
s = session name
c = connection information
k = encryption keys
t = time the session is active
m = media description and transport address
a = (zero or more) media attributes lines per media line

To understand SIP and SDP, it is best to take a look at a concrete example. Assume Alice is at her PC and she wants to call Bob, who is also working at his PC. Assume Alice's and Bob's PCs are both equipped with SIP-based software for making and receiving phone calls. We shall assume that Alice knows the IP address of Bob's PC.

Alice initiates a SIP session by sending Bob an INVITE message. In some embodiments, this message is sent as an ASCII message in the data load of a TCP segment. In some embodiments, it is sent in the payload section of a UDP segment. This INVITE message may be sent via UDP to the 5060 port for SIP. The INVITE message includes an identifier for Bob (e.g., bob@193.64.210.89), an indication of Alice's current IP address (e.g., alice@167.180.112.24), an indication that Alice desires to receive audio, which is to be encoded in format AVP 0 (PCM encoded µ-law) and encapsulated in RTP, and an indication that she wants to receive the RTP packets on a port 38060. In some embodiments, Alice's INVITE message could have the following form:
INVITE sip:bob@domain.com SIP/2.0
Via: SIP/2.0/UDP 167.180.112.24
From:sip:alice@hereway.com
To: sip:bob@domain.com
Call-ID: a2e3a@pigeon.hereway.com
Content-Type: application/sdp
Content-Length: 885
v=0
o=alice 2890844526 2890844526 IN IP4 hereway.com
c = IN IP4 167.180.112.24
m=audio 38060 RTP/AVP 0
a=rtpmap:0 PCMU/8000

After receiving Alice's INVITE message (the SDP Offer), Bob sends an SIP response message (the SDP Answer), again in an ASCII format. This response SIP message is also sent to the SIP port 5060. Bob's response, if his PC feels this is a valid SIP message, and if Bob actually answers the INVITE request, is a 200 OK message, which includes an indication of his IP address, his desired encoding and packetization for reception, and his port number to which the audio packets should be sent (e.g., "c= In IP4 193.64.210.89, m= audio 48753 RTP/AVP 0"). After receiving Bob's response, Alice sends Bob an SIP ACK (acknowledgment) message to ensure both SIP user agents are in sync with each other. After this SIP transaction, Bob and Alice can talk. Alice will also encode and packetize the audio as requested, using PCM µ-law, and send the audio packets to port number 48753 at IP address 193.64.210.89. Bob will encode and packetize the audio, using PCM µ-law also, as requested and send the audio packets to port number 38060 at IP address 167.180.112.24.

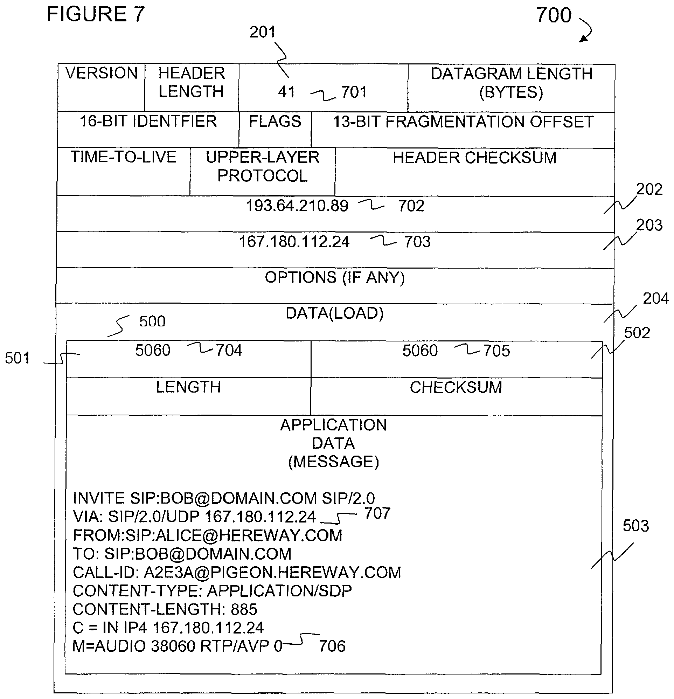

Figure 7 is a schema 700 of an IPv4 datagram with a UDP segment 500 included in its load section 204. Included within the UDP segment is a SIP INVITE protocol instruction written in ASCII text. In some embodiments, a TOS field 201 contains a DSCP value of 41, referenced as 701. In some embodiments, a Source IP Address 202 contains an IP address 702. This IP address is shown to be 193.64.210.89. In some embodiments, a destination IP address 203 contains a destination IP address 703. This destination IP address is shown to be 167.180.112.24. In some embodiments, the UDP segment 500 contains a source port value 704 (e.g., #5060) which is contained in field 501. In some embodiments, a destination port field 502 contains a destination port value (e.g., #5060) referenced herein as 705. In some embodiments, this ASCII to text contains a recipient IP address shown to be 167.180.112.24, referenced herein as 707. In some embodiments, an RTP segment value of 0 is included within this SIP INVITE text referenced as 706. In some embodiments, this value (e.g., "0") denotes a PCM µ-law codec.

In some embodiments, more than one codecs can be denoted by a SDP message. For example, a SIP header may be used with an SDP message (the offer) denoting the use of more than one voice codec or both a voice and a video codec in the same SDP payload:
INVITE sip:bob@biloxi.com SIP/2.0
Via: SIP/2.0/UDP pc33.atlanta.example.com; branch=z9hG4bK776asdhds
Max-Forwards: 70
To: Bob <sip:bob@biloxi.example.com>
From: Alice <sip:alice@atlanta.example.com>;tag=1928301774
Call-ID: a84b4c76e66710@pc33.atlanta.example.com
CSeq: 314159 INVITE
Contact: <sip:alice@pc33.atlanta.example.com>
Content-Type: application/sdp
Content-Length:...
v=0
o=alice 2890844526 2890844526 IN IP4 atlanta.com
c=IN IP4 10.1.3.33
t=0 0
m=audio 49172 RTP/AVP 0
a=rtpmap:0 PCMU/8000
m=video 51172 RTP/AVP 31 34
a=rtpmap:31 H.261/90000
a=rtpmap:34 H.263/90000

The proceeding SDP message may describe the sending of voice and video data wherein, as described above, voice data of a certain audio codec is sent to a specific port (e.g., codec G.711 sent to port 49172). Additionally described, in this example, is the sending of a video data to a specific port (shown to be 51172 denoted by "m=video 51172 RTP/AVP 31 34") that has a variety of different supported video codecs (e.g., H.261 denoted by a=rtpmap:31 H.261/90000, H.263 denoted by a=rtpmap:34 H.263/90000).

### EXAMPLE EMBODIMENTS DENOTING A NEW OR CHANGED DSCP VALUE USING A DSCP CHANGE FIELD AND SIP AND SDP

In some embodiments, a new media attributes line (e.g., "a = (zero or more) media attributes lines") is inserted into the SDP message to denote the change of a DSCP value associated with a SIP session (e.g., media stream which uses a specific port number (i.e., a DSCP Change Field is inserted). In some embodiments, an additional media attribute line (e.g., "a=dscp 41") is inserted into the SDP message and the media level. An example SIP message with an SDP body could have the following form:
INFO sip:alice@192.168.10.20 SIP/2.0
Via: SIP/2.0/TCP server1.atlanta.example.com; branch=z9hG4bK776asegma
Max-Forwards: 70
To: Alice <sip:alice@192.168.10.20>; tag=1524625623
From: <sip:server1@atlanta.example.com>; tag=1928301774
Call-ID: a84b4c76e66710@pc33.atlanta.example.com
CSeq: 22756 INFO
Contact: <sip:alice@pc33.atlanta.example.com>
Content-Type: application/sdp
Content-Length: ...
v=0
o=alice 2890844526 2890844526 IN IP4 atlanta.example.com
c=IN IP4 10.1.3.33
t=0 0
m=audio 49172 RTP/AVP 0
a=rtpmap:0 PCMU/8000
a=dscp 41

In some embodiments, a=dscp 41 adds a new service class "Unassigned" to the SIP session. In some embodiments, this new DSCP value replaces the old DSCP value associated with the SIP session. In some embodiments, an additional media attributes line (e.g., "a=dscp 34") is for example inserted each "m=" line. In some embodiments, a=dscp 34 adds a new "Video" service class to the SIP session:
INFO sip:alice@192.168.10.20 SIP/2.0
Via: SIP/2.0/TCP server1.atlanta.example.com; branch=z9hG4bK776asegma
Max-Forwards: 70
To: Alice <sip:alice@192.168.10.20>; tag=1524625623
From: <sip:server1@atlanta.example.com>; tag=1928301774
Call-ID: a84b4c76e66710@pc33.atlanta.example.com
CSeq: 22756 INFO
Contact: <sip:alice@pc33.atlanta.example.com>
Content-Type: application/sdp
Content-Length: ...
v=0
o=alice 2890844526 2890844526 IN IP4 atlanta.com
c=IN IP4 10.1.3.33
t=0 0
m=audio 49172 RTP/AVP 0
a=rtpmap:0 PCMU/8000
a=dscp 41
m=video 51172 RTP/AVP 31 34
a=rtpmap:31 H.261/90000
a=rtpmap:34 H.263/90000
a=dscp 34

In some embodiments, not only can the example SIP INFO method be used to implement a DSCP Change Field, but other SIP methods may be used such as, for example, INVITE, UPDATE, or other suitable SIP methods which carry SDP offers.

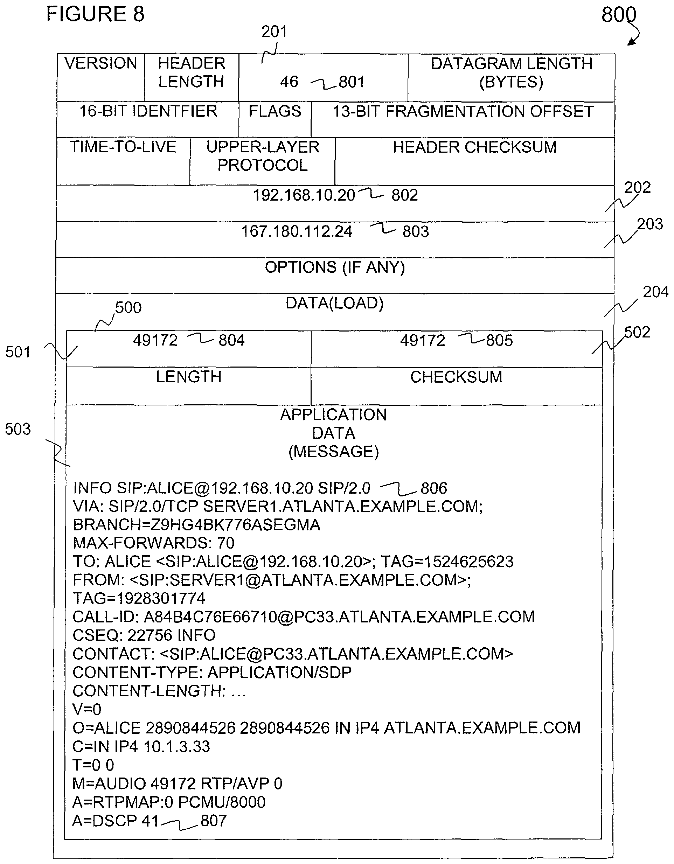

Figure 8 is a schema 800 of an IPv4 datagram with a UDP segment 500 included in its load section 204. Included within the UDP segment is a SIP INFO protocol instruction 806 written in ASCII text. In some embodiments, a TOS field 201 contains a DSCP value of 46 (i.e., denoting a Telephony Service Class), referenced as 801. In some embodiments, a source IP address 202 contains an IP address 802. This IP address is 192.168.10.20. In some embodiments, a destination IP address 203 contains a destination IP address 803. This destination IP address is 167.180.112.24. In some embodiments, the UDP segment 500 contains a source port value 804 (e.g., #49172) which is contained in field 501. In some embodiments, a destination port field 502 contains a destination port value (e.g., #49172) referenced herein as 805. In some embodiments, this ASCII to text contains a sender IP address of 192.168.10.20, referenced herein as 806. In some embodiments, a new DSCP value 41 is described and referenced at 807. In some embodiments, this DSCP value denotes a pending change of service from Telephony (Service Class 46) to Unassigned (Service Class 41).

### EXAMPLE EMBODIMENTS DENOTING THE CHANGE OF A DSCP VALUE USING DSCP CHANGE FIELD AND RTSP AND SDP

In some embodiments, RTSP is used in combination with SDP or alone to implement a DSCP Change Field. RTSP was first described in RFC 2326 as a protocol for use in streaming media systems which allows a client to remotely control a streaming media server, issuing VCR-like commands such as "play" and "pause", and allowing time-based access to files on a server. In some embodiments, an RTSP header contains the following methods and fields: DESCRIBE- includes an RTSP URL (rtsp ://...), and the type of reply data that can be handled. The reply includes the presentation description, in, for example, in SDP format; SETUP- request that specifies how a single media stream must be transported; PLAY- request that will cause one or all media streams to be played; PAUSE- request that temporarily halts one or all media streams, so it can later be resumed with a PLAY request; RECORD- request that can be used to send a stream to the server for storage; and TEARDOWN- request that is used to terminate the session. It stops all media streams and frees all session related data on the server. In some embodiments, a RTSP session is initiated between client ("C") and server ("S") using the following exchange:
C: SETUP rtsp://audio.example/com/twister/audio RTSP/1.0
   CSeq: 1
   Transport: rtp/udp; compression; port=3056; mode=PLAY
S: RTSP/1.0 200 OK
   CSeq: 1
   Session: 4231
C: PLAY rtsp://audio.example.com/twister/audio.en/lofi
   RTSP/1.0
   Range: npt=0-
   CSeq: 2
S: RTSP/1.0 200 OK
   CSeq: 2
   Session: 4231
C: PAUSE rtsp://audio.example.com/twister/audio.en/loi RTSP/1.0
   Range: npt=37
   CSeq: 3
   Session: 4231
S: RTSP/1.0 200 OK
   CSeq: 3
   Session: 4231
C: TEARDOWN rtsp://audio.example.com/twister/audio.en/ lofi RTSP/1.0
   CSeq: 4
   Session: 4231
S: RTSP/1.0 200 OK
   CSeq: 4
   Session: 4231

In some embodiments, RTSP can be used to implement a DSCP Change Field. For example, in some embodiments, an SDP session can be included with the body of an RTSP dialog that contains a DSCP Change Field. This implementation can be described as follows:
C: SETUP rtsp://audio.example/com/twister/audio RTSP/1.0
   CSeq: 1
   Transport: rtp/udp; compression; port=3056; mode=PLAY
S: RTSP/1.0 200 OK
   CSeq: 1
   Session: 4231
C: PLAY rtsp://audio.example.com/twister/audio.en/lofi
   RTSP/1.0
   Range: npt=0-
   CSeq: 2
   Session: 4231
   Session: 4231
   m=audio 49172 RTP/AVP 0
   a=rtpmap:0 PCMU/8000
   a=dscp 34
S: RTSP/1.0 200 OK
   CSeq: 2
   Session: 4231

In some embodiments, an additional media attributes line (e.g., "a=dscp 34") is inserted into an SDP message to denote a new media stream (i.e., Video) to be used. In some embodiments, not only can the RTSP PLAY method be used to implement an DSCP Change Field, but other RTSP methods may be used such as, for example, SETUP, PAUSE, RECORD, TEARDOWN, or other suitable RTSP methods.

### EXAMPLE EMBODIMENTS DENOTING THE CHANGE OF A DSCP VALUE USING DSCP CHANGE FIELD AND SIP

In some embodiments, a DSCP Change Field can be implemented using SIP alone without SDP. For example, a SIP header may be extended with the insertion of a new tag value into an existing header field. For example, the "Resource-Priority" Header (see RFC 4412.) in the INVITE can be extended to set the DSCP for the SIP dialog (e.g., "Resource-Priority: dsn.routine; dscp=46"). This new tag, representing a DSCP change field, is reflected in the following example:
INVITE sip:bob@biloxi.com SIP/2.0
Via: SIP/2.0/UDP pc33.atlanta.com; branch=z9hG4bK776asdhds
Max-Forwards: 70
To: Bob <sip:bob@biloxi.com>
From: Alice <sip:alice@atlanta.com>;tag=1928301774
Call-ID: a84b4c76e66710@pc33.atlanta.com
Resource-Priority: dsn.routine; dscp=46
CSeq: 314159 INVITE
Contact: <sip:alice@pc33.atlanta.com>
Content-Type: application/sdp
Content-Length: ...

### EXAMPLE EMBODIMENT IN THE VOICE OVER IP SETTING

In some embodiments, once a SIP session has been initiated, there may be a need to change the DSCP value first established in the SIP session. For example, when adding video to an existing intent based phone call, the DSCP value must be changed. The DSCP value which is normally 101110 binary, or decimal 46 needs to track to the normal video packet markings, which are different than pure voice packet markings. In some embodiments, these video packet markings are typically 100010 binary, or decimal 34. In some embodiments, a VoIP management application such as Cisco Systems, Inc.'s CallManager™ is constructed as a Back-to-Back-User Agent (B2BUA), and not as a Stateful Proxy or SBC as is commonly used in SIP. For example, an application such as CallManager™ may need to verify that the phone knows to remark all its RTP packets such as, for example, AF41 (or some other local marking). (See DSCP Table above.) In certain circumstances, the exact marking is chosen by, for example, CallManager™, and not mandatory by industry guidelines. That said, in some embodiments, there has been and continues to be a means to do this with Skinny Client Control Protocol (SCCP) or some other suitable protocol.

And again, in some embodiments, there may be a need to change the DSCP value when a voice call loses its reservation, but local policy has the voice call to remain up. A, just without the benefit of having the reservation of resources between the phones. In some embodiments, a VoIP management application, such as, the aforementioned CallManager™, may allow for an RSVP resource reservation protocol mechanism. However, a user of, for example, CallManager™ may not want their call to necessarily be terminated if a reservation is lost during a call, which may or may not be the local default configuration of this network domain. In some embodiments, because some routers have only one priority queue, all EF marked RTP packets will get into the priority queue, with or without a reservation. The DSCP marking of a VoIP call may be reduced to a DSCP below EF/46. (See DSCP Table above.) In an RSVP Agent architecture, the phone may never know if it is using RSVP for a reservation in the routers between the caller and callee, therefore it will never know if an existing reservation has been lost, yet the phone is what marks the RTP media packets, so it needs to be told to mark the packets differently than the normal EF/46 marking. In some embodiments, the DSCP marking is for the underlying router infrastructure to act upon, but if there is no reservation for a given call, or the reservation is termination but the call is not, the DSCP marking of that call cannot remain as if there is a reservation due to the way the routers may act upon the marking to give preferential treatment to the call's packets. Therefore, in some embodiments, a call control entity such as CallManager™ will need to have the ability to instruct the phones in the call that lost a reservation to mark that call's packets differently. In one embodiment, the means of initially setting the DSCP of a call, as instructed by a CallManager™ can be used to change the existing DSCP marking of a call. In the SIP community, one embodiment is called a reINVITE by the industry. This is not a new SIP Method, but a reuse of the existing INVITE Method, but with the call identification parameters exactly that of an existing call, and merely changing one or more calling characteristic parameters of that call to be different than was initially established in the call. Changing the DSCP of the media stream qualifies as a call characteristic parameter, just as changing of a call's codec midstream.

In another embodiment, the B2BUA (e.g., SIP line side server for a User Agent (UA)) sends a can send a SIP INFO Method request message to a line side UA (which the B2BUA will have a relationship with at this point) informing it to mark all future RTP packets within the current session to a new DSCP value (other than the one it is using now). In some embodiments, the INFO Method provides additional information within a voice dialog or session. In some embodiments, the UA receiving this INFO Request will know exactly which call is being affected because the Call-ID, To tag and From Tag will identify the correct flow to be modified, and not chance another call flow being affected. In some embodiments, the new DSCP value will be placed in either an existing IP header (e.g., IPv4 or IPv6), in some type of new header, or a new XML Event Package. In some embodiments, if the SIP server is not a B2BUA configuration, it would be assumed that the UA that received this INFO would then send a reINVITE to the far side UA to have the other direction of RTP marking changed. In some embodiments, this reINVITE would synchronize all relevant SIP servers along the way. In some embodiments, this is performed all while realizing the DSCP marking is locally significant. In some embodiments, a means is provided within a call to have a VoIP management application such as CallManager™ tell a phone to change the DSCP it is marking its RTP packets with to a new DSCP marking or value. In some embodiments, using the INFO Method, a Request message that is built within a specific dialog from a CallManager™ to a line side UA is sent to tell the UA to use a different DSCP value.

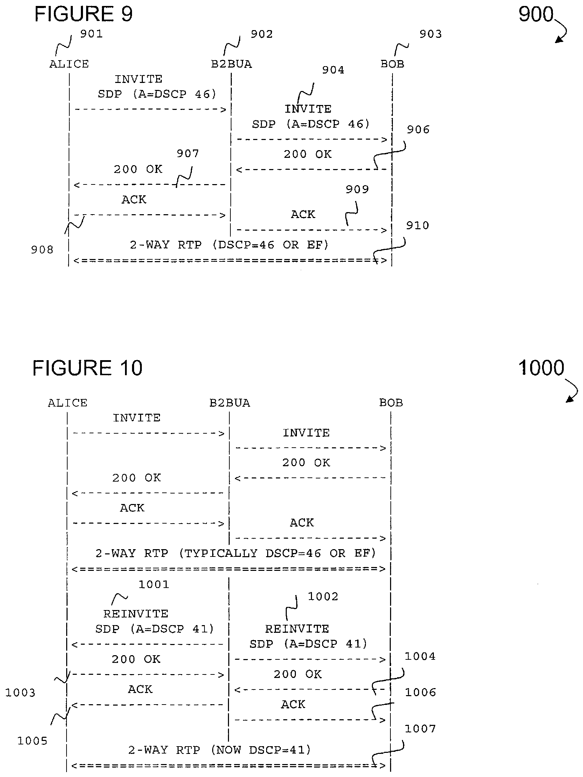

Figure 9 is a diagram 900 describing the initial setting of DSCP values within the B2BUA context. In some embodiments, a user 901 ("Alice") sending an INVITE via SIP to a B2BUA 902 with a DSCP value of 46 (e.g., "a=dscp 46") contained in a SDP session field. This B2BUA 902, in turn, sends an INVITE message 904 to a user 903 ("Bob"). User 903 ("Bob") may then send a 200 OK message back to the B2BUA 902, which, in turn, forwards the message to user 901 ("Alice"). Once Alice receives the 200 OK message, she may send an acknowledgement ("ACK") 908 back through the B2BUA 902 and Bob receives it as an ACK 909. As described elsewhere in this document, once this B2BUA 902 forwards Alice's and Bob's actual IP address to each of them (e.g., during this INVITE and ACK process Bob received Alice's IP address and vice versa), Bob and Alice are free to communicate without the need of the B2BUA 902. Media flow 910 reflects this point.

Figure 10 is a diagram 1000 describing the changing of DSCP values with the B2BUA context. In some embodiments, once a SIP dialog or session is established, the DSCP value may need to be changed. For example, a new media flow may need to be added, or removed. In Figure 10, a DSCP value is changed. In some embodiments, a series of reINVITE messages are sent via the B2BUA 902 notifying Bob and Alice directly of a change in DSCP values. Here, the DSCP value is being changed from 46 to 41. It is however to be appreciated that one DSCP values could be changed to any other DSCP value (e.g., in the example shown from 41 to 34 (Video), 24 (Broadcast Video), 0 (Standard), or some other suitable service class denoted by a DSCP value). In some embodiments, once the DSCP change notification is sent by the B2BUA 902, both Bob and Alice send a 200 OK messages (e.g., Nos. 1003 & 1004), which are responded to with ACKs (e.g., Nos. 1005 & 1006). After this series of ACKs are sent, then the DCSP value for Bob and Alice may be changed to 41, as reflected in 1007. In some embodiments, other SIP methods could be implemented such as INFO, and UDPATE could also be used to effectuate this change in DSCP values.

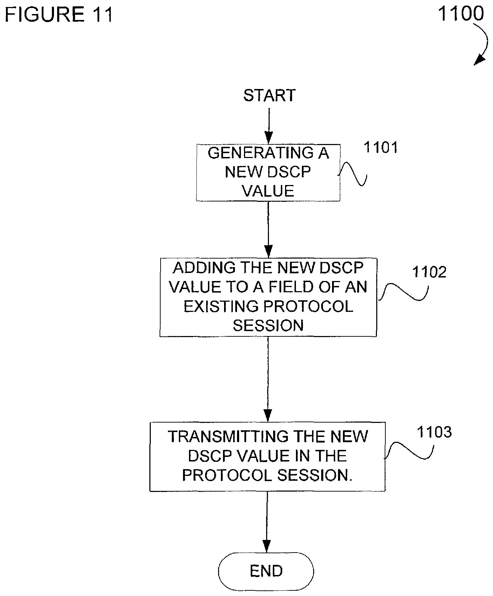

Figure 11 is a flow chart describing a method 1100 to update with a new DSCP value. In some embodiments, a new DSCP value is generated by a process 1101. In some embodiments, the value will be generated automatically by an application using a particular type of media flow. For example, if a user wants to add video to their VoIP based call, then a new DSCP value will be added the particular protocol (e.g., SIP, SDP, RTSP etc.) that they are using to effectuate this call. Similarly, if a user wants to use a completely new type of media flow in lieu of the existing media flow, then a new DSCP value will be generated to replace the existing DSCP value. For example, if a user wanted to go from using VoIP to video only, then a new DSCP value (e.g., 32) would replace the old DSCP value (e.g., 46). In some embodiments, this addition of a DSCP value occurs via a process 1102. In some embodiments, the new DSCP value is transmitted via a process 1103 in a protocol session. Certain programming techniques and technologies may be implemented to facilitate the generation and insertion of a new DSCP value. For example, a certain socket programming techniques may be used to define and insert a new DSCP value into a field of one of the example protocols, and related session, referenced herein. Socket programming techniques are well known in the art. (See Computer Networking: A Top-Down Approach Featuring the Internet 2nd Edition, James F. Kurose and Keith W. Ross, Addison-Wesley, 2003.) It will be appreciated that other programming techniques that are known in the art may be used. Technologies used to implement socket programming, or another suitable programming technique, may include one or more object-oriented programming languages such as, for example, Java™, C++, Delphi™, C#™, or the like. Additionally, structured programming languages such as, for example, C, Assembly, or other suitable structured programming language may also be used. In some embodiments, a protocol session may be a session implementing SIP, SDP, RTSP, or some other suitable protocol.

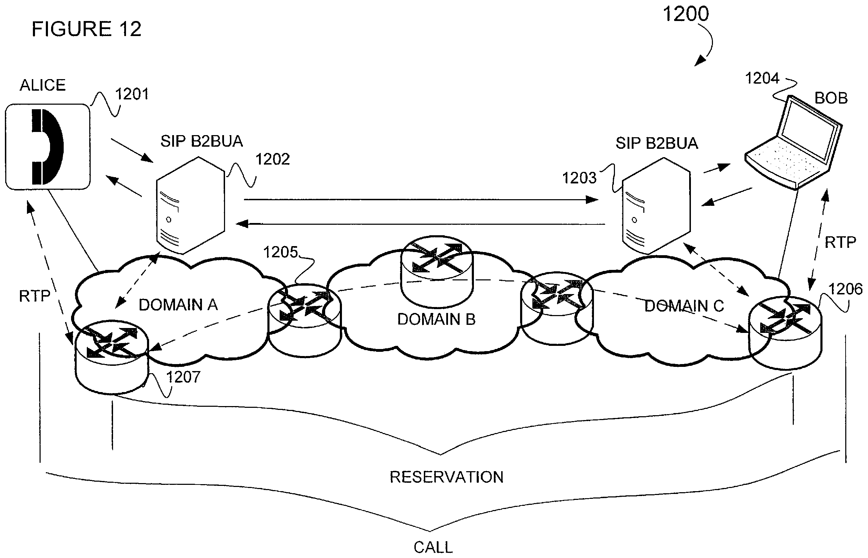

Figure 12 is a network diagram 1200 describing the initiation of a call reservation over a VoIP network. As shown by way of example in Figure 12, Alice 1201 (e.g., using a VoIP telephone device) initiates a VoIP call to Bob 1204 (e.g., using a VoIP softphone) via a B2BUAs 1202 and 1203. The SIP protocol may be used to set up the call and thus SIP is used to initiate a dialog between Bob 1204 and Alice 1201. During the course of the initiation of the SIP dialog or session, a number of routers (e.g., routers 1205, 1206, and 1207) may be used to control the PBH of each IPv4 or IPv6 datagram containing an RTP media flow. These routers may control the priority that each datagram received based upon its DSCP value.

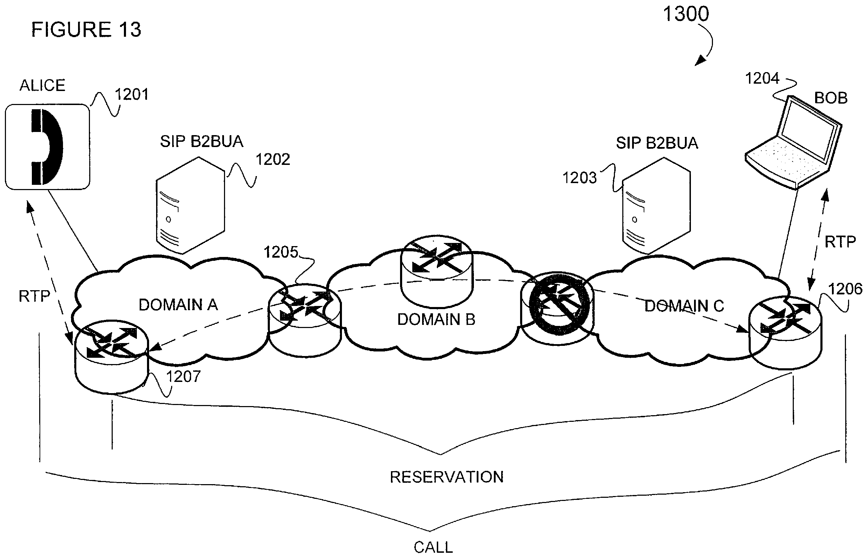

Figure 13 is a network diagram 1300 describing the failure of a bandwidth reservation. In some embodiments, one user (e.g., Alice 1201 or Bob 1204) may be able to reserve particular bandwidth for a media flow (e.g., a phone call) with a router (e.g., router 1205, 1206, and 1207). In some cases, however, one of these routers controlling the PHB and media flow may fail in that the reservation is lost. Where failure occurs, the endpoints for the call (e.g., Alice 1201 and Bob 1204) need to be told of the failure and the need for a new DSCP value. This is especially true given the fact that, in some embodiments, this endpoint knows nothing of the reservation. Figure 13 reflects an example instance where a router connecting Bob 1204 and Alice 1201 fails to maintain a reservation.

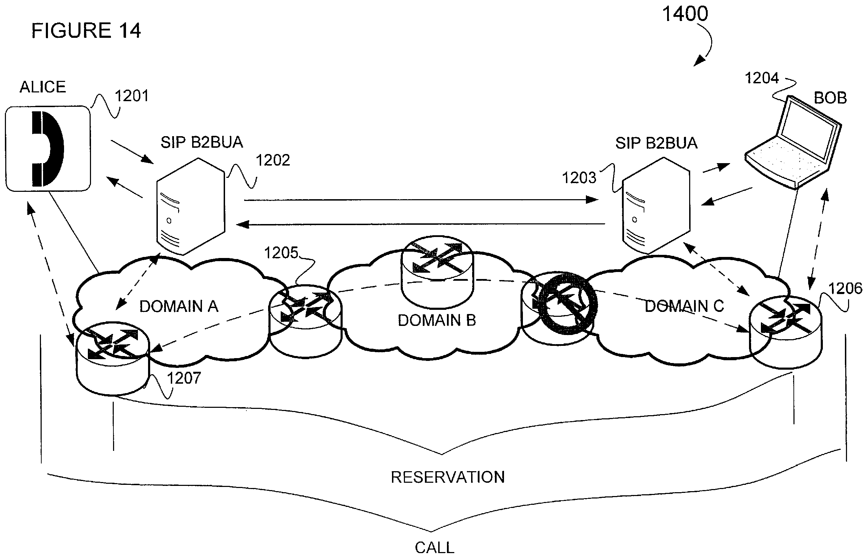

Figure 14 is a network diagram 1400 describing the endpoints (e.g., Alice 1201 or Bob 1204) being informed of the reservation failure and the need for a new DSCP value. In some embodiments, the B2BUAs 1202 and 1203 communicate the new DSCP value to each other during the course of providing other status information. In some embodiments, these B2BUAs 1202 and 1203 are adjacent, while, in some embodiments, they are not adjacent. In some embodiments, routers (e.g., routers 1205, 1206, & 1207), including routers acting as SBCs, provide the new DSCP value information to adjacent routers during the course of providing, for example, routing or forwarding table updates. In some embodiments, these new DSCP values are provided separate and apart from messages exchanged between routers during the table update process.

In an example embodiment, the method includes generating a new DSCP value, adding the new DSCP value to a field of an existing protocol session, and transmitting the new DSCP value in the protocol session. The method may include replacing an existing DSCP value with the new DSCP value. In an example embodiment, the method further includes adding the new DSCP value to the protocol session via a second field, such that there are two DSCP values for the protocol session. The protocol session may be an SDP session, a SIP session, an RTSP session or the like. In an example embodiment, a method is described that includes transmitting the new DSCP value in a SIP INFO method request message to a line side User Agent (UA) informing it to mark all future Real-time Transport Protocol (RTP) packets within the current session to the new DSCP value, wherein the new DSCP value will be different than a presently used DSCP value. A machine-readable medium may contain a set of instructions that are executable by a suitability programmed computer to perform the methods described herein.

In some embodiments, a system is provided that includes a first device that is operatively coupled to a second device, wherein communications between the first device and second device is controlled by a third device which includes a B2BUA or SBC. A transmitter may be operatively coupled to the first device, wherein the transmitter can be used to transmit a new DSCP value to be used by a protocol session. In some embodiments, the transmitter transmits a new DSCP value to be added to an existing DSCP value via a second field within the protocol session.

In some embodiments, an apparatus is provided including means for generating a new DSCP value, means for adding the new DSCP value to a field of an existing protocol session, and means for transmitting the new DSCP value in the protocol session. In some embodiments, the apparatus further includes means for replacing an existing DSCP value with the new DSCP value. The apparatus further may include means for adding the new DSCP value to the protocol session via a second field, such that there are two DSCP values for the protocol session. The apparatus may include means for controlling the per hop behavior of an RTP media flow within a domain. Means for suggesting the new DSCP value to an adjacent domain may be provided.

In some embodiments, an apparatus is described comprising one or more processors to generate a new Differentiated Services Code Point (DSCP) value, add the new DSCP value to a field of an existing protocol session, and to transmit the new DSCP value in the protocol session. In some embodiments, this apparatus includes one or more processors configured to replace an existing DSCP value with the new DSCP value. In some embodiments, this apparatus includes one or more processors configured to add the new DSCP value to the protocol session via a second field, such that there are at least two DSCP values for the protocol session. In some embodiments, the protocol session is a Session Description Protocol (SDP) session. In some embodiments, the protocol session is a Session Initiation Protocol (SIP) session. In some embodiments, the protocol session is a Real-Time Streaming Protocol (RTSP) session. In some embodiments, the one or more processors are dynamically configured to control the Per-Hop Behavior (PHB) of an RTP media stream via a control plane protocol within a domain. In some embodiments, one or more processors are configured to allow for the establishment of a new DSCP value via a control plane layer operatively connected to an adjacent domain for a session between domains.

It is to be understood that the above description is intended to be illustrative, and not restrictive. Although numerous characteristics and advantages of various embodiments as described herein have been set forth in the foregoing description, together with details of the structure and function of various embodiments, many other embodiments and changes to details will be apparent to those of skill in the art upon reviewing the above description. The scope of the invention should be, therefore, determined with reference to the appended claims, along with the full scope of equivalents to which such claims are entitled. In the appended claims, the terms "including" and "in which" are used as the plain-English equivalents of the respective terms "comprising" and "wherein," respectively. Moreover, the terms "first," "second," and "third," etc., are used merely as labels, and are not intended to impose numerical requirements on their objects.

It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment.

## Claims

1. A method, being performed by a SIP server, comprising:
initiating a Session Initiation Protocol, SIP, communication session between a line side User Agent, UA, and a far side UA, in which the line side UA sets an initial Differentiated Services Code Point, DSCP, value in a protocol session field for the SIP communication session,
receiving a SIP INVITE message, including the initial DSCP value, from the line side UA and forwarding it to the far side UA;
receiving, from the far side UA, a SIP response message and forwarding it to the line side UA;
transmitting, to the far side UA, a SIP acknowledgement message, received from the line side UA, thereby starting the SIP communication session;
in response to a change in condition of the SIP communication session:
generating (1101) a new DSCP value;
replacing (1102) the initial DSCP value by the new DSCP value in the protocol session field or adding the new DSCP value to a second protocol session field of the existing SIP communication session, such that there are at least two DSCP values for the protocol session; and
transmitting (1103) a SIP INFO method request message having the new DSCP value to the line side UA informing it to mark all future Real-Time Transport Protocol, RTP, packets for the current SIP communication session with the new DSCP value, wherein the new DSCP value is different to the initial DSCP value.

2. The method of claim 1, wherein a change in condition of the session comprises a loss of reservation of the session.

3. The method of claim 1, wherein a change in condition of the session comprises a change in the type of data being communicated in the communication session.

4. The method of claim 1, wherein, in response to transmitting the new DSCP value in the protocol session, the line side UA sends a reINVITE message to the far side UA.

5. A computer-readable medium having instructions stored thereon, which, when executed by a computer, cause the computer to perform all steps of a method according to any one of the preceding claims.

6. An apparatus comprising:
means for performing all steps of a method according to any of claims 1 to 4.

7. A system comprising:
a first device operatively coupled to a second device, wherein communications between the first device and second device are controlled by a third device which includes a Back-to-Back-User-Agent, B2BUA, Session Border Controller, SBC, or SIP Proxy Server; and
a forth device, operatively coupled to the first device, comprising an apparatus according to claim 6.

## Patentansprüche

1. Verfahren, das von einem SIP-Server ausgeführt wird, das Folgendes umfasst:
Initiieren eines Sitzungsinitiierungsprotokolls, SIP, einer Kommunikationssitzung zwischen einem leitungsseitigen User Agent, UA und einem entfernte UA, wobei der leitungsseitige UA einen anfänglichen differenzierten Dienstcodepunkt- (Differentiated Services Code Point, DSCP) Wert in einem Protokollsitzungsfeld für die SIP-Kommunikationssitzung festlegt,
Empfangen einer SIP INVITE-Nachricht, die den anfänglichen DSCP-Wert umfasst, von dem leitungsseitigen UA und Weiterleiten derselben an den entfernten UA;
Empfangen von dem entfernten UA einer SIP-Antwortnachricht und Weiterleiten derselben an die leitungsseitige UA; Übertragen an den entfernten UA einer SIP-Bestätigungsnachricht, die von dem entfernten UA empfangen wird, wodurch die SIP-Kommunikationssitzung gestartet wird;
als Reaktion auf eine Änderung des Zustands der SIP-Kommunikationssitzung:
Erzeugen (1101) eines neuen DSCP-Werts;
Ersetzen (1102) des ursprünglichen DSCP-Werts durch den neuen DSCP-Wert in der Protokollsitzung oder Hinzufügen des neuen DSCP-Werts zu einem zweiten Protokollsitzungsfeld der vorhandenen SIP-Kommunikationssitzung, so, dass es mindestens zwei DSCP-Werte für die Protokollsitzung gibt; und
Übertragen (1103) einer SIP-INFO-Verfahrennanforderungsnachricht mit dem neuen DSCP-Wert an den leitungsseitigen UA, die ihn darüber informiert, alle zukünftigen Echtzeittransportprotokoll-Pakete (Real-Time Transport Protocol, RTP) für die aktuelle SIP-Kommunikationssitzung mit dem neuen DSCP-Wert zu markieren, wobei der neue DSCP-Wert sich vom ursprünglichen DSCP-Wert unterscheidet.

2. Verfahren nach Anspruch 1, wobei eine Änderung des Sitzungszustands einen Verlust der Reservierung der Sitzung umfasst.

3. Verfahren nach Anspruch 1, wobei eine Änderung des Sitzungszustands eine Änderung des Typs der Daten ist, die in der Kommunikationssitzung übertragen werden.

4. Verfahren nach Anspruch 1, wobei als Reaktion auf das Senden des neuen DSCP-Werts in der Protokollsitzung der leitungsseitige UA eine reINVITE Nachricht an den entfernten UA sendet.

5. Computerlesbares Medium, auf dem Anweisungen gespeichert sind, die, wenn es von einem Computer ausgeführt werden, den Computer dazu veranlassen, alle Schritte eines Verfahrens nach einem der vorhergehenden Ansprüche auszuführen.

6. Vorrichtung, die Folgendes umfasst:
ein Mittel zum Durchführen aller Schritte eines Verfahrens nach einem der Ansprüche 1 bis 4.

7. System, das Folgendes umfasst:
eine erste Vorrichtung, die betriebsfähig mit einer zweiten Vorrichtung gekoppelt ist, wobei die Kommunikation zwischen der ersten Vorrichtung und der zweiten Vorrichtung von Folgendem gesteuert wird: einer dritten Vorrichtung, die einen Rücken-an-Rücken-User-Agent (Back-to-Back-User-Agent, B2BUA), einen Sitzungsgrenzsteuereinheit (Session Border Controller, SBC) oder einen SIP-Proxyserver umfasst; und einer vierten Vorrichtung, die betriebsfähig mit der ersten Vorrichtung gekoppelt ist, die eine Vorrichtung nach Anspruch 6 umfasst.

## Revendications

1. Procédé réalisé par un serveur SIP, consistant à :
ouvrir une session de communication sur protocole d'ouverture de session (SIP) entre un agent d'utilisateur (UA) côté ligne et un UA côté distant, l'UA côté ligne fixant une valeur de code d'accès aux services différenciés (DSCP) initiale dans un champ de session sur protocole pour la session de communication SIP ;
recevoir un message SIP INVITE ;
inclure la valeur DSCP initiale, en provenance de l'UA côté ligne, et la transférer à l'UA côté distant ;
recevoir, en provenance de l'UA côté distant, un message de réponse SIP et le transférer à l'UA côté ligne ;
transmettre, à l'UA côté distant, un message d'accusé de réception SIP, reçu en provenance de l'UA côté ligne, de manière à démarrer la session de communication SIP ;
en réponse à un changement de condition de la session de communication SIP :
générer (1101) une nouvelle valeur DSCP ;
remplacer (1102) la valeur DSCP initiale par la nouvelle valeur DSCP dans le champ de session sur protocole ou ajouter la nouvelle valeur DSCP à un second champ de session sur protocole de la session de communication SIP existante, de sorte qu'il y ait au moins deux valeurs DSCP pour la session sur protocole ; et
transmettre (1103) un message de demande de méthode SIP INFO comprenant la nouvelle valeur DSCP à l'UA côté ligne pour l'informer de marquer avec la nouvelle valeur DSCP tous les futurs paquets sur protocole de transport en temps réel (RTP) pour la session de communication SIP actuelle, la nouvelle valeur DSCP étant différente de la valeur DSCP initiale.

2. Procédé selon la revendication 1, dans lequel un changement de condition de la session comprend une perte de réservation de la session.

3. Procédé selon la revendication 1, dans lequel un changement de condition de la session comprend un changement du type de données communiquées pendant la session de communication.

4. Procédé selon la revendication 1, dans lequel, en réponse à la transmission de la nouvelle valeur DSCP pendant la session sur protocole, l'UA côté ligne envoie un message reINVITE à l'UA côté distant.

5. Support lisible par ordinateur sur lequel sont stockées des instructions qui, lorsqu'elles sont exécutées par un ordinateur, amènent l'ordinateur à réaliser toutes les étapes d'un procédé selon l'une quelconque des revendications précédentes.

6. Appareil comprenant :
un moyen permettant de réaliser toutes les étapes d'un procédé selon l'une quelconque des revendications 1 à 4.

7. Système comprenant :
un premier dispositif couplé de manière fonctionnelle à un deuxième dispositif, les communications entre le premier dispositif et le deuxième dispositif étant contrôlées par un troisième dispositif qui inclut un agent d'utilisateur jumelé (B2BUA), un contrôleur de session en périphérie (SBC) ou un serveur mandataire SIP ; et
un quatrième dispositif, couplé de manière fonctionnelle au premier dispositif, et comprenant un appareil selon la revendication 6.
